# EUROPEAN PATENT SPECIFICATION

(11) **EP 4 153 816 B1**
(45) Date of publication and mention of the grant of the patent: **29.05.2024**
(21) Application number: 21721639.9
(22) Date of filing: 28.04.2021
(51) Int. Cl.: E01H 1/08, A01G 20/47, A01M 7/00

(54) **KIT FOR THE CONVERSION OF A BLOWER INTO AN ATOMIZER AND BLOWER PROVIDED WITH SUCH KIT**
KIT ZUR UMWANDLUNG EINES GEBLÄSES IN EINEN ZERSTÄUBER UND GEBLÄSE MIT SOLCH EINEM KIT
KIT DESTINÉ À LA CONVERSION D'UNE SOUFFLANTE EN UN ATOMISEUR ET SOUFFLANTE ÉQUIPÉE D'UN TEL KIT

(30) Priority: 20.05.2020 IT 202000011719
(43) Date of publication of application: 29.03.2023
(73) Proprietor: Emak S.p.A., 42011 Bagnolo in Piano (Reggio Emilia) (IT)
(72) Inventor: COLLI, Roberto, 42123 Reggio Emilia (IT); FERRARI, Marco, 41012 Carpi (MO) (IT); CATELLANI, Andrea, 42011 Bagnolo in Piano (RE) (IT)
(74) Representative: Corradini, Corrado
(86) International application number: PCT/IB2021/053505
(87) International publication number: WO 2021/234480

(56) References cited:
- WO-A1-2013/065435
- WO-A1-2019/018372
- US-A1- 2007 029 407
- US-B1- 6 837 447

## Description

### TECHNICAL FIELD

The present invention relates to a conversion kit for a blower, which is a device for looking after green areas configured to generate a flow of air useful for pushing leaves and dirt in a predetermined direction. Blowers can also be configured to suck up leaves and the like and grind them into smaller pieces.

### PRIOR ART

Blower and atomizers are known, where the former are configured to generate an air flow adapted to push small objects, such as leaves, and the latter are configured to generate an air flow that crosses a diffuser device where the air is mixed with a fluid to be diffused. To generate said air flow, both the tools comprise a casing provided with an outlet mouth and an impeller housed within the casing and configured to generate an air flow through the outlet mouth.

Atomizers comprise a tank of the fluid to be diffused, which is connected through a dispensing conduit to the diffuser device. It is generally convenient for the fluid to be at a greater pressure than atmospheric pressure, in order to guarantee optimal nebulization thereof. When the tank is full, the actual head of the liquid may be sufficient to obtain such effect, however as the liquid in the tank gradually diminishes, the head is reduced and therefore the pressure of the fluid in the dispensing conduit is reduced. To overcome such problem, the use of pumps or compressors adapted to pressurize the fluid in the tank is known.

Conversion kits for blowers are known, which have a tank and a diffuser device connected to such tank, which enable the blower to be used for diffusing a liquid. In particular, such conversion kit envisages connecting the diffuser device to an outlet mouth of the flow of air generated by the impeller of the blower.

In order to overcome the aforementioned problem of the overpressure to be imparted to the liquid in order to guarantee excellent nebulization, such kits are provided with an electrical or manual pump for generating the excess pressure of the liquid contained in the tank.

A conversion kit in accordance with the preamble of claim 1 is revealed in WO2019/018372 A1.

### DISCLOSURE OF THE INVENTION

The invention makes available a conversion kit for converting a blower into an atomizer, said kit comprising the features of claim 1.

Thanks to such solution, a conversion kit is made available which enables the liquid contained in the tank to be pressurized without the need for electric or manual pumps. The fact that pumps are not present makes the kit lighter and more compact, and also stronger and more reliable than known devices, as the number of complex components that could break or cause malfunctioning is reduced.

Furthermore, according to the invention the tubular body may be subdivided into two sections that are removably associable with one another, of which a first section is configured to be fixed to the blower, and a second section with which the diffuser device is associated, and wherein the pressurization conduit places in fluid communication an internal volume of the first section of the tubular body with the top portion of the tank.

In this way it is possible to connect already existing diffuser devices to the blower thus allowing a simplification of the design and production. Furthermore, this enables the diffuser device to be changed, i.e. the second section, without having to change the pressurization conduit.

According to another aspect of the invention the kit can comprise a quick uncoupling device configured to removably connect the first section and the second section to one another.

In this way the kit can be particularly compact and does not require any further connectors for fixing the blower.

According to yet another aspect of the invention, the tubular body may be provided with a converging portion and the pressurization conduit comprises an inlet opening realized in said converging portion.

In this way it is possible to remove the overpressure to send the tank into the area in which it is maximum.

An aspect of the invention envisages that the pressurization conduit may comprise a first section that extends directly from an inlet opening of the pressurization conduit itself realized in the tubular body and that has a longitudinal axis transverse to the direction of the fluid within the tubular body.

Another aspect of the invention envisages that the inlet mouth of the tubular body can have an edge configured to internally contact an edge of the outlet mouth of the blower along the entire extension thereof.

In this way, all the air generated by the blower is used for diffusing the liquid.

Yet another aspect of the invention envisages that the kit can comprise a support frame to which the tank is fixed, and a pair of shoulder straps fixed to said support frame. Thanks to this solution the use of the blower converted into an atomizer is particularly practical.

Furthermore, according to another aspect of the invention, the diffuser device comprises a mechanism for the regulation of the flow rate of fluid crossing the dispensing conduit. In this way it is possible to adapt the dispensing and diffusion of the liquid present in the tank based on requirements.

According to yet another aspect of the invention, the tubular body can comprise a first quick fixing element adapted to enable the fixing of the inlet mouth of the tubular body to an outlet mouth of the blower placed downstream of an impeller of the blower itself with respect to a movement direction of the air flow generated by the blower.

In this way no other elements are necessary nor is the original tube of the blower necessary for the connection of the kit to the blower.

The invention further makes available an atomizer according to claim 8.

Although the main aim of the present invention is to be able to transform a blower into an atomizer without the need to install working machines on the blower dedicated to the pressurization of the tank, as happens in normal atomizers, it is clear how the inventive concept of the present invention may be applied to a new atomizer, not provided with working machines such as compressors or pumps dedicated to the pressurization of the tank. The invention therefore makes available an atomizer according to claim 9

### BRIEF DESCRIPTION OF THE DRAWINGS

Further features and advantages of the invention will be more apparent after reading the following description provided by way of non-limiting example, with the aid of the accompanying drawings.
Figure 1 is a lateral view of a kit for the conversion to an atomizer according to the invention.
Figure 2 is a lateral view of a blower on which the kit of Figure 1 is installed.

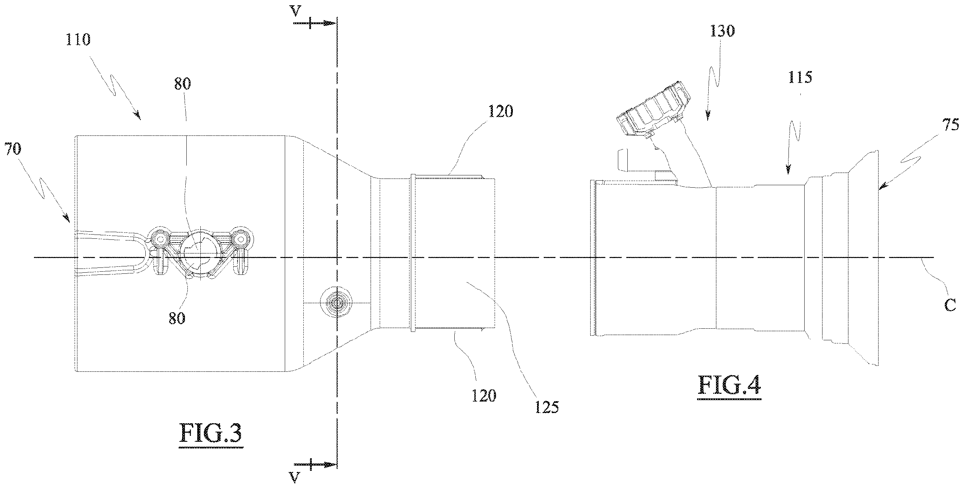

Figure 3 is a lateral view of a first section of a tubular body of the kit of the previous figures.
Figure 4 is a lateral view of a second section of a tubular body of the kit of the previous figures.
Figure 5 is a sectional view along the section plane V-V of Figure 3.
Figure 6 is a front view of the first section of Figure 3.
Figure 7 is a sectional view of Figure 5 according to the plane of section VII-VII.
Figure 8 is a front view of the second section of Figure 4.
Figure 9 is a sectional view of Figure 8 according to the plane of section IX-IX.
Figure 10 is an enlarged view of the blower of Figure 1.
Figure 11 is a front view of the blower of Figure 10.
Figure 12 is a partial exploded view of another embodiment of a blower according to the invention.
Figure 13 is a sectional view of a tank of the kit of Figure 1.

### BEST MODE OF THE INVENTION

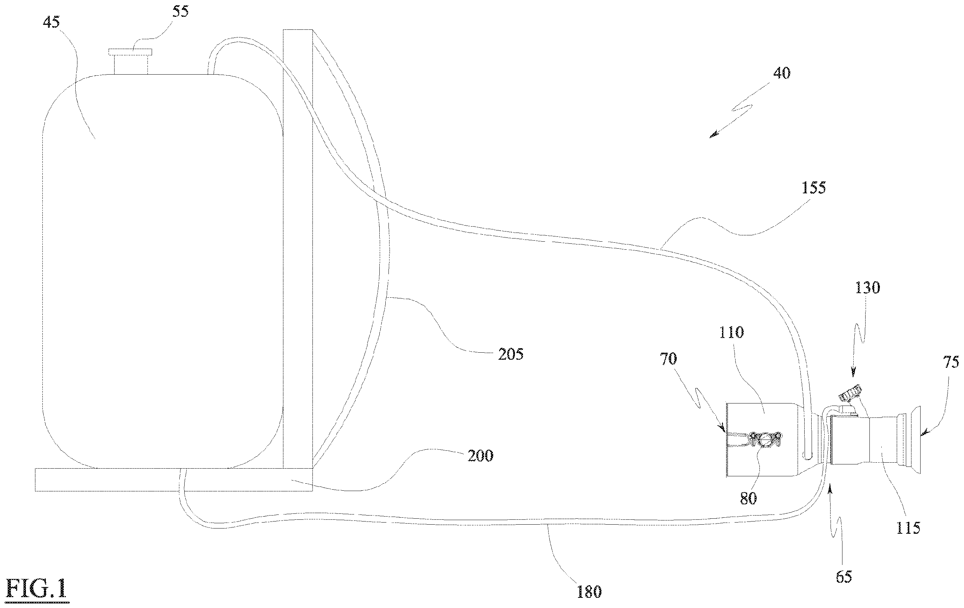

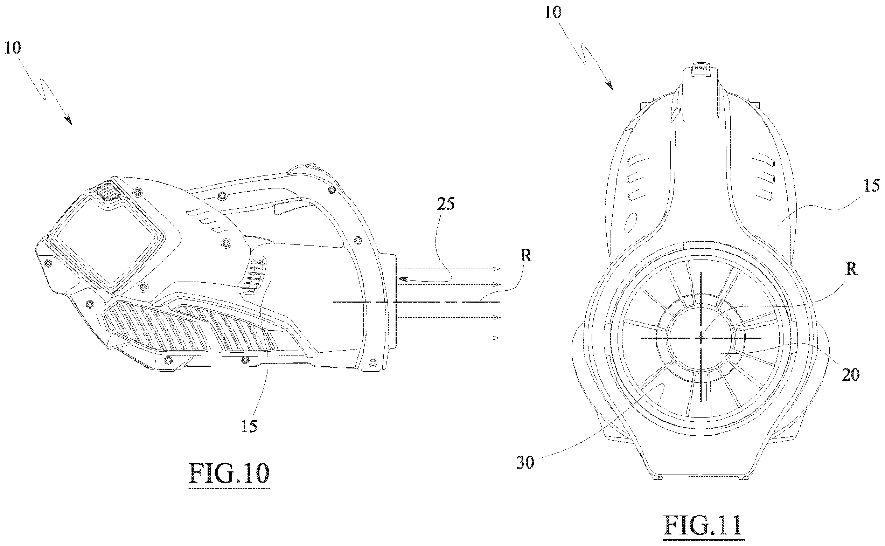

With particular reference to Figures 1,2,10,11,12, the numbers 10,10' indicate overall a blower on which an atomizer conversion kit 40 is installed, which allows a blower to diffuse a liquid into the air.

A blower 10,10' comprises a casing 15,15', e.g. rigid, inside which an impeller 20,20' is housed, configured to generate a pressurized air flow which crosses an outlet mouth 25,25' of the casing itself.

It is specified that the term rigid means that it is not deformable under the normal loads to which it is subject during operation.

The impeller is a revolution body provided with a plurality of blades? that extend radially starting from an axis of rotation R with respect to which the impeller itself is hinged to the casing 15,15'.

The casing 15,15' comprises a conveying conduit 30,30', e.g. rigid, of the air flow generated by the impeller, which is placed immediately downstream of the impeller 20,20' with respect to the direction of the air flow generated by the impeller itself.

The conveying conduit 30,30' therefore has an inlet mouth 35' substantially placed immediately downstream of the impeller 20,20' and an opposite outlet mouth, which for example coincides with the outlet mouth 25,25' of the blower, e.g. of the casing. The conveying conduit has, for example, a circular cross section, preferably it has at least one rectilinear section at the outlet mouth.

In the embodiment of the blower indicated with 10, wherein the impeller has rectilinear blades, the impeller is contained in a rectilinear conduit of the casing and is arranged with its axis of rotation R parallel e.g. coaxial, to a longitudinal axis of the conduit within which it is inserted. In this embodiment the conveying conduit 30 is the portion of the rectilinear conduit of the casing within which the impeller is housed.

In the embodiment of the blower indicated with 10', in which the impeller is centrifugal, the casing comprises a box-shaped chamber (provided with a lateral wall that follows a spiral-shaped profile with respect to the axis of rotation R) in which the impeller is contained and that is provided with a single air inlet and a single air flow outlet, which outlet communicates directly with said conveying conduit 30', i.e. with the inlet mouth 35' thereof.

The casing 15,15' preferably comprises a handle for grasping the blower. The blower can be energized, i.e. the impeller can be placed in rotation with respect to the axis of rotation R, by an electric motor or an internal combustion engine, housed within respective housings. The casing is preferably made of polymer material.

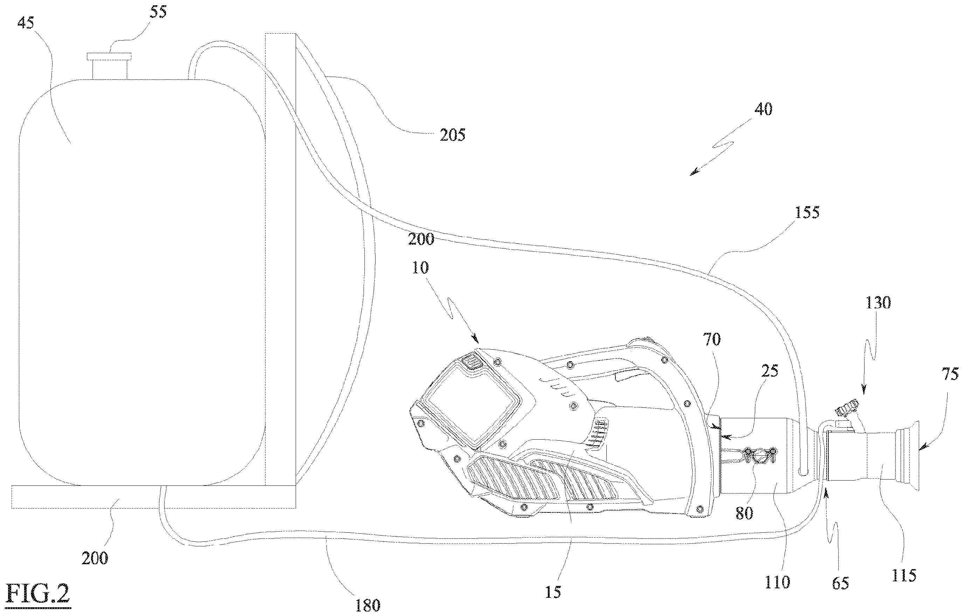

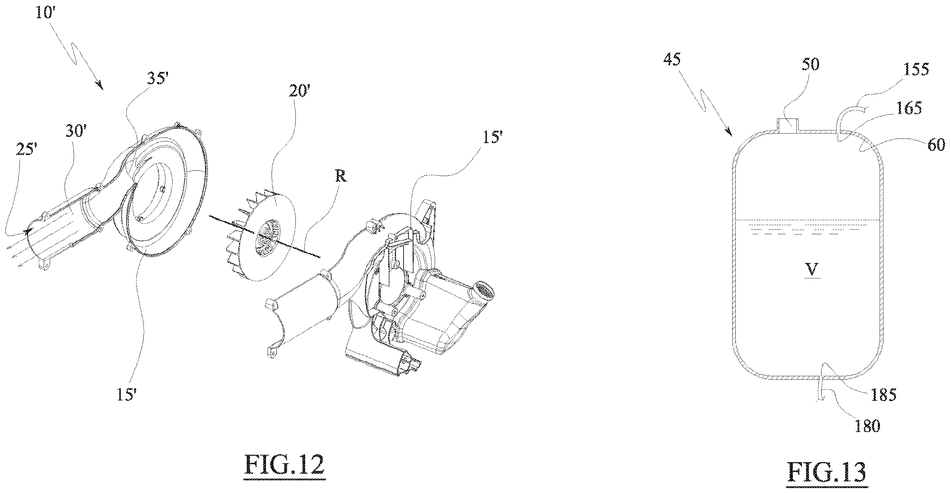

With particular reference to Figures 2 and 13, the kit 40 comprises a tank 45, e.g. conformed like a cannister, provided with a top-up opening 50, realized in a portion of the top of the tank itself, which places in communication an internal volume V of the tank, adapted to contain the liquid to be diffused, with the outside and that can be closed again by a cap 55. In use, the internal volume V is filled in part by the liquid to be diffused and by air. The internal volume V is delimited by an inner surface 60 of the tank 45, which is crossed by the top-up opening 50.

The tank is for example made of polymer material.

The kit 40 comprises a tubular body 65, e.g. rigid, adapted to be fixed to the blower 10,10' so as to be crossed by an air flow generated by the impeller of the blower. For example, the tubular body 65 extends along a central axis C.

The tubular body 65 is provided with an inlet mouth 70, e.g. adapted to be placed directly in fluid communication with the outlet mouth 25,25' of the casing of the blower, and an opposite outlet mouth 75.

The inlet mouth 70 of the tubular body 65 and the outlet mouth 25,25' of the blower can be engaged directly in one another.

In particular, the tubular body is conformed in motion to house the entire air flow leaving the blower. In detail, the inlet mouth 70 of the tubular body has a perimeter edge (which delimits the inlet mouth itself) configured to contact internally, along the entire extension thereof, an edge of the outlet mouth 25,25' of the blower.

Preferably, the inlet mouth 70 of the tubular body is conformed so as to be engaged with the, or to sealing house the, outlet mouth 25,25' of the blower. In other words, the inlet mouth of the tubular body has a complementary shape to the outlet mouth of the blower, so as to realize a substantially fluid tight coupling.

At the outlet mouth 75, the tubular body comprises a diverging portion (with respect to the direction of the air flow through the tubular body).

The inlet mouth 70 and the outlet mouth 75 are both crossed by the central axis C of the tubular body, the tubular body therefore being substantially rectilinear.

The tubular body 65 can comprise a first fixing element 80 (with a variable conformation based on the conformation of the blower), adapted to enable the removable fixing of the inlet mouth 70 of the tubular body 65 to the outlet mouth 25,25' of the blower 10,10' so that said mouths are placed directly in fluid communication with one another. In particular, the first fixing element is part of a fixing device that also comprises a fixing element configured to cooperate with the first fixing element and associated with the blower.

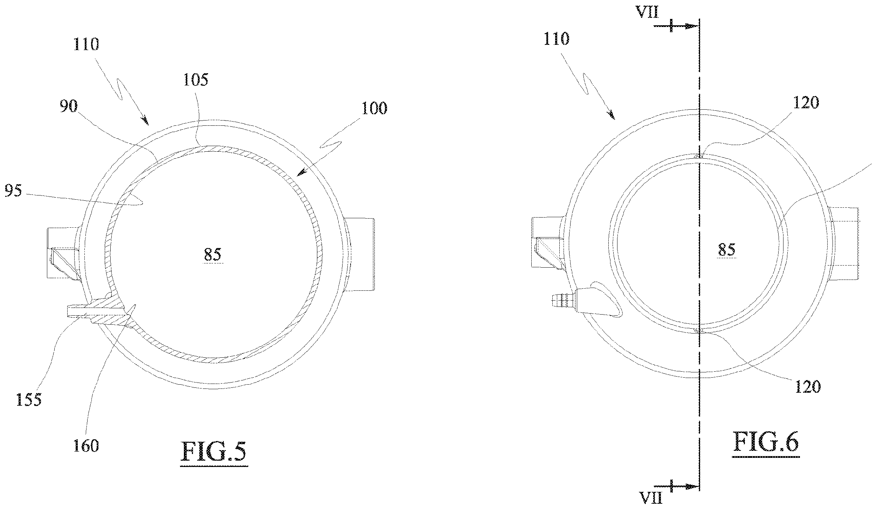

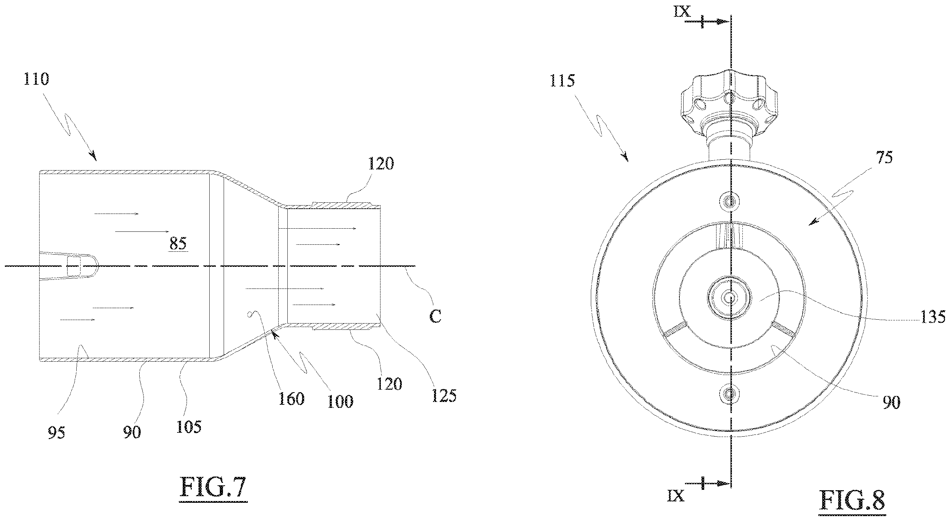

The tubular body 65 is substantially provided with an internal axial cavity 85 that extends from the inlet mouth to the outlet mouth (along the central axis C) and is crossed by the air flow generated by the impeller. Furthermore, with particular reference to Figures 5,7 and 9 the tubular body 65 has a lateral wall 90 provided with an inner surface 95, preferably provided at least with a converging portion 100 (with respect to the air flow direction through the tubular body).

In the embodiment illustrated, such converging portion 100 is formed by a conical surface concentric to the central axis C. For example, the inner surface 95 comprises a cylindrical portion followed by the conical portion and at least another cylindrical portion until reaching the outlet mouth in which the tubular body is divergent, where such divergent portion is defined by a conical portion coaxial with the central axis C.

The lateral wall 90 also comprises an outer surface 105 opposite the inner surface, i.e. turned towards the outside. For example, such outer surface follows the profile of the inner surface 95.

In the embodiment illustrated, the first fixing element 80 projects externally from the tubular body from the outer surface 105 of the tubular body 65.

In accordance with the invention, the tubular body 65 is realized in two distinct sections and associable removably with one another, e.g. through a quick release type device. In particular, the tubular body comprises a first section 110 proximal to the blower and adapted to be directly connected to the blower, and a second section 115 distal from the blower.

For example, the first section 110 comprises the inlet mouth 70 of the tubular body and the converging portion 100 of the inner surface 95, the second section comprises the outlet mouth 75 of the tubular body.

The tubular body 65 comprises a second fixing device adapted to enable the relative fixing between the first section and the second section, which preferably comprises a guide adapted to prevent a relative rotation (about the central axis C) between the two sections and to enable the coupling between the two sections only in one predetermined orientation of the second section with respect to the first section.

Such guide can for example comprise at least one relief 120 that projects radially from the portion of lateral wall of one from among the first section and the second section, which preferably extends prevalently along a longitudinal axis, and which is inserted into a respective complementary groove made in the lateral wall of the second section.

The fixing device can comprise a tooth, e.g. which projects radially with respect to a top portion of the relief, and which is adapted to be inserted in a respective seat realized in the other section for blocking with an obstacle connection the relative sliding between the first section and the second section along the direction of the central axis C.

In the embodiment illustrated such fixing device comprises an axially hollow shank 125, realized in the first section at an opposite end of the first section 110 with respect to the inlet mouth 70 and adapted to be inserted into a respective seat realized at one end of the second section 115 opposite the outlet mouth 75. The first section comprises two reliefs 120, as described above, diametrically opposite with respect to the central axis C which project externally from the shank.

The kit 40 then comprises a diffuser device 130 configured to dispense and diffuse the fluid contained in the tank 45. The diffuser device 130 is connected, preferably rigidly connected, to the tubular body 65, e.g. to the second section 115.

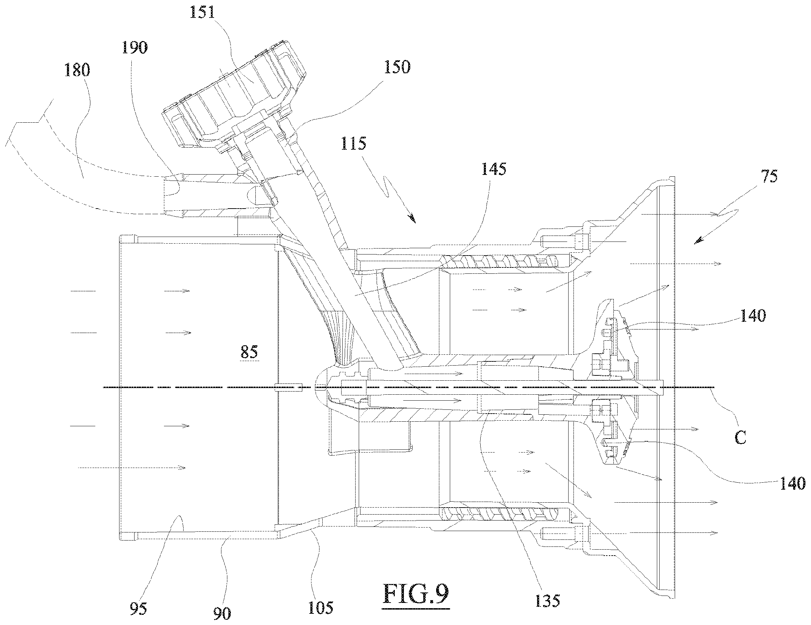

The diffuser device 130 comprises a liquid dispensing body 135 housed within the tubular body and provided with a plurality of nozzles 140 (see Figure 9) configured to dispense the liquid leaving the diffuser device directing it through the outlet mouth 75 of the tubular body 65. Such plurality of nozzles 140 is for example of the adjustable type. In particular, the nebulizer body comprises a plurality of adjustable nozzles, for example adjustable in the dimension of the passage section and/or in the shape of the passage section.

The dispensing body 135 is positioned centrally within the tubular body, preferably coaxially with the central axis C and has a smaller radial extension than the distance of the inner surface 95 from the central axis C, so that the dispensing body is surrounded laterally (radially) by the air flow that comes from the inlet mouth 70.

The diffuser device comprises a fluid conduit 145 that supplies the dispensing body 135 and that is adapted to be placed in communication with the tank 45. In particular, such fluid conduit 145 crosses the tubular body, has an outlet opening in fluid communication with the dispensing body, i.e. with the nozzles 140 of the dispensing body and an inlet opening external to the tubular body. The fluid conduit 145 enables a rigid connection between the dispensing body and the tubular body 65 (substantially sustaining the overhang from the wall, i.e. of the inner surface, of the tubular body).

The diffuser device 130 can comprise a flow rate regulation mechanism of the fluid to be diffused. In the embodiment illustrated, such flow rate regulation mechanism acts on the passage section of the fluid conduit 145. For example, the flow rate regulation mechanism comprises a guillotine 150 that can be activated manually through a knob 151 mounted on the body of the diffuser device, i.e. on the fluid conduit 145. In particular, the guillotine is movable between a first position, in which it does not reduce the passage section of the fluid conduit 145, and a second position, in which it occludes at least partially the passage section of the fluid conduit 145.

The kit comprises a pressurization conduit 155 that places in fluid communication an internal volume of the tubular body 65, i.e. the axial cavity 85, with the internal volume V of the tank 45, at a top portion of the tank itself. In particular, the pressurization conduit comprises an inlet opening 160 which crosses the inner surface 95 of the tubular body 65 and an outlet opening 165 (see Figure 13) which crosses the inner surface 60 of the tank 45 at a top portion of the tank itself.

The pressurization conduit 155 places in fluid communication an internal volume of the tubular body 65 placed downstream of the inlet mouth 70 and upstream of the plurality of dispensing nozzles 140 with respect to the direction of the air flow that crosses the tubular body 65.

In particular, the inlet opening 160 crosses a portion of the inner surface 95 placed between the inlet mouth 70 of the tubular body and the plurality of liquid dispensing nozzles 140.

Preferably, the pressurization conduit 155 places in communication an internal volume of the first section 110 of the tubular body, i.e. a portion of axial cavity 85 of the first section 110, with the internal volume of the tank 45 at a top portion of the tank itself. The inlet opening 160 therefore crosses a portion of the inner surface of the first section of the tubular body.

Preferably, the inlet opening 160 leads into the converging portion 100 of the inner surface of the tubular body.

In an embodiment not illustrated, the inlet opening of the pressurization conduit 155 is realized in the second section of the tubular body, in a portion comprised between one end of the second distal section from the outlet mouth 75 of the tubular body 65 and the plurality of dispensing nozzles 140.

The area of the passage section at the end of the converging portion is comprised between 0.3 and 0.5 times the area of the passage section at the start of the converging portion (with respect to the air flow direction through the tubular body).

The pressurization conduit, at least in proximity to the inlet opening 160, has a diameter comprised between 1mm and 40mm, preferably between and 20mm, e.g. between and 4mm.

The pressurization conduit can comprise a first section that extends directly from the inlet opening 160 of the pressurization conduit itself, e.g. realized as a single part with the tubular body, which has a transverse longitudinal axis, e.g. perpendicular, to the direction of the fluid within the tubular body, i.e. to the central axis C. Said first section comprises an inlet realized in the inner surface and an outlet realized in the outer surface of the tubular body. Furthermore, the first section can comprise an element for the connection thereto of another section of the pressurization conduit. In the embodiment illustrated such element comprises a shank axially crossed by the first section of the pressurization conduit and provided with annular shaped radial projections configured to retain a tube made of elastically deformable material that is fitted onto said shank.

The pressurization conduit can comprise a second section, contiguous to the first section and that reaches the tank, which can be preferably realized in a hose, e.g. made of elastomer material.

The kit 40 comprises a dispensing conduit 180 which places in fluid connection the diffuser device, i.e. the plurality of nozzles of the diffuser device, with a lower portion of the tank 45.

In particular, the dispensing conduit 180 comprises an inlet opening 185 that crosses a lower portion of the inner surface 60 of the tank 45, e.g. a bottom portion of such surface, and an outlet opening 190 that communicates with the inlet opening of the fluid conduit 145.

The kit 40 does not comprise any electromechanical or mechanical device, such as pumps, configured to generate an overpressure in the liquid present in the tank or in the dispensing conduit or in the diffuser device or to generate an overpressure in the air present in the tank or in the pressurization conduit. The overpressure of the fluid is generated by means of the air flow created by the blower, which enters into the tubular body through the inlet mouth x and from there reaches the tank, in particular the portion of the internal volume of the tank occupied by air that is above the liquid present in the tank.

The kit 40 can also comprise a support frame 200 to which the tank 45 is fixed, e.g. rigidly fixed. Such support frame 200 is L-shaped and supports the tank 45 at the bottom. Furthermore, a vertical portion of the support frame acts as a backrest for the user, e.g. it can be provided with padding so as to tire the user less.

A pair of shoulder straps 205 are connected to the support frame adapted to make the support frame 200 wearable by an operator.

The blower cannot be connected to said support frame.

Although the figures explicitly illustrate a blower provided with the kit according to the invention, such figures are sufficient, in particular Figure 1, to illustrate an atomizer 10,130 provided with the inventive principle.

In particular, the atomizer 10,130 comprises a casing 20 provided with an outlet mouth 25, an impeller 30 housed in the casing and configured to generate an air flow that crosses said outlet mouth 25, a tank 45 adapted to contain a liquid, a diffuser device 130 in fluid communication with the outlet mouth of the casing and provided with a liquid dispensing nozzle 140, a pressurization conduit 155 that places in fluid communication an environment downstream of the impeller 30 and upstream of the dispensing nozzle 140, with respect to the air flow generated by the impeller itself, and a dispensing conduit 180 that places in fluid communication the dispensing nozzle of the diffuser device with a lower portion of the tank 45.

The components of the atomizer have the same characteristics as the blower and the kit described above.

The operation of the conversion kit according to the invention is as follows.

When the conversion kit is installed on the blower, a part of the air flow generated thereby reaches the tank through the pressurization conduit, where it generates an overpressure in the fluid contained therein, which flows to the dispensing nozzles. The part of the air flow the continues crossing the tubular body reaches the diffuser device promoting the diffusion of the liquid dispensed by the dispensing nozzles. In particular, the air flow surrounds the dispensing body and its nozzles.

The same operation applies to the atomizer according to the invention.

The invention thus conceived is susceptible to several modifications and variations, all falling within the scope of the appended claims.

In practice, the materials used, as well as the contingent shapes and sizes, can be whatever according to the requirements without for this reason departing from the scope of protection of the following claims.

## Claims

1. Conversion kit (40) for converting a blower (10,10') into an atomizer, said kit comprising:
- a tank (45) adapted to contain a liquid,
- a tubular body (65) adapted to be fixed to the blower (10,10') and provided with an inlet mouth (70) and an outlet mouth (75),
- a diffuser device (130) associated with said tubular body and provided with a liquid dispensing nozzle (140),
- a pressurization conduit (155) that places in fluid communication an internal volume (85) of the tubular body (65) placed between the inlet mouth (70) and the dispensing nozzle (140) of the liquid with a top portion of the tank (45), and
- a dispensing conduit (180) that places in fluid communication the dispensing nozzle (140) of the diffuser device (130) with a lower portion of the tank (45)
wherein the tubular body (65) is subdivided into two sections that are removably associable with one another, of which a first section (110) configured to be fixed to the blower (10,10'), and a second section (115) with which the diffuser device (130) is associated, said conversion kit being **characterized by** the fact that the pressurization conduit (155) places in fluid communication an internal volume of the first section (110) of the tubular body with the top portion of the tank (45).

2. Kit (40) according to claim 1, comprising a quick uncoupling device configured to removably connect the first section (110) and the second section (115).

3. Kit (40) according to any one of the preceding claims, wherein the tubular body (65) is provided with a converging portion (100) and the pressurization conduit (155) comprises an inlet opening (160) realized in said converging portion.

4. Kit (40) according to any one of the preceding claims, wherein the pressurization conduit (155) comprises a section that extends directly from an inlet opening (160) of the pressurization conduit itself realized in the tubular body (65), said section having a longitudinal axis transverse to the direction of the fluid within the tubular body (65).

5. Kit (40) according to any one of the preceding claims, wherein the inlet mouth (70) of the tubular body (65) has an edge configured to entirely contact, along its whole extension, an edge of an outlet mouth of the blower.

6. Kit (40) according to any one of the preceding claims, comprising a support frame (200) to which the tank (45) is fixed, and a pair of shoulder straps (205) fixed to said support frame.

7. Kit (40) according to any one of the preceding claims, wherein the diffuser device (130) comprises a regulation mechanism (150,155) of the flow rate of fluid that crosses the dispensing conduit (180).

8. Atomizer comprising a blower, the blower (10,10') comprising a casing (15,15') provided with an outlet mouth (25,25'), an impeller (20,20') housed in the casing and configured to generate an air flow that crosses said outlet mouth , the atomizer further comprising a kit (40) according to claim 1, wherein the tubular body (65) is connected to the casing and the outlet mouth (70) of the tubular body is in direct fluid communication with the outlet mouth of the blower.

9. Atomizer (10,10',130) comprising:
- a casing (15,15') provided with an outlet mouth (25),
- an impeller (20,20') housed in the casing and configured to generate an air flow that crosses said outlet mouth,
- a conveying conduit (30,30') of the air flow generated by the impeller, which is placed immediately downstream of the impeller (20,20') with respect to the direction of the air flow generated by the impeller itself, said conveying conduit comprising an inlet mouth (35') substantially placed immediately downstream of the impeller (20,20') and an opposite outlet mouth which coincides with the outlet mouth (25,25') of the blower,
- a tubular body (65) adapted to be fixed to outlet mouth (25) of the blower (10,10') and provided with an inlet mouth (70) and an outlet mouth (75),
- a tank (45) adapted to contain a liquid,
- a diffuser device (130) associated with said tubular body and provided with a liquid dispensing nozzle (140),
- a pressurization conduit (155) that places in fluid communication an internal volume (85) of the tubular body (65), placed between the inlet mouth (70) and the dispensing nozzle (140) of the liquid, with a top portion of the tank (45), and
- a dispensing conduit (180) that places in fluid communication the dispensing nozzle (140) of the diffuser device with a lower portion of the tank (45)
wherein the tubular body (65) is subdivided into two sections that are removably associable with one another, of which a first section (110) configured to be fixed to the blower (10,10'), and a second section (115) with which the diffuser device (130) is associated, said atomizer being **characterized by** the fact that the pressurization conduit (155) places in fluid communication an internal volume of the first section (110) of the tubular body with the top portion of the tank (45).

## Patentansprüche

1. Umrüstkit (40) zum Umrüsten eines Gebläses (10, 10') in einen Zerstäuber, das Kit umfassend:
- einen Behälter (45), der angepasst ist, um eine Flüssigkeit zu enthalten,
- einen rohrförmigen Körper (65), der angepasst ist, um an dem Gebläse (10, 10') befestigt zu werden, und der mit einer Einlassmündung (70) und einer Auslassmündung (75) versehen ist,
- eine Diffusorvorrichtung (130), die mit dem rohrförmigen Körper assoziiert und mit einer Flüssigkeitsabgabedüse (140) versehen ist,
- eine Druckleitung (155), die ein inneres Volumen (85) des rohrförmigen Körpers (65), das zwischen der Einlassmündung (70) und der Abgabedüse (140) der Flüssigkeit platziert ist, mit einem oberen Abschnitt des Behälters (45) in Fluidverbindung bringt, und
- eine Abgabeleitung (180), die die Abgabedüse (140) der Diffusorvorrichtung (130) mit einem unteren Abschnitt des Behälters (45) in Fluidverbindung bringt, wobei der rohrförmige Körper (65) in zwei Bereiche unterteilt ist, die lösbar miteinander assoziierbar sind, wovon ein erster Bereich (110) konfiguriert ist, um an dem Gebläse (10, 10') befestigt zu werden, und einen zweiten Bereich (115), mit dem die Diffusorvorrichtung (130) assoziiert ist, wobei das Umrüstkit **dadurch gekennzeichnet ist, dass** die Druckleitung (155) ein inneres Volumen des ersten Bereichs (110) des rohrförmigen Körpers mit dem oberen Abschnitt des Behälters (45) in Fluidverbindung bringt.

2. Kit (40) nach Anspruch 1, umfassend eine Schnellentkopplungsvorrichtung, die konfiguriert ist, um den ersten Bereich (110) und den zweiten Bereich (115) lösbar zu verbinden.

3. Kit (40) nach einem der vorherigen Ansprüche, wobei der rohrförmige Körper (65) mit einem konvergierenden Abschnitt (100) versehen ist und die Druckleitung (155) eine Einlassöffnung (160) aufweist, die in dem konvergierenden Abschnitt ausgeführt ist.

4. Kit (40) nach einem der vorherigen Ansprüche, wobei die Druckleitung (155) einen Bereich umfasst, der sich direkt von einer Einlassöffnung (160) der Druckleitung an sich erstreckt, die in dem rohrförmigen Körper (65) ausgeführt ist, wobei der Bereich eine Längsachse quer zu der Richtung des Fluids innerhalb des rohrförmigen Körpers (65) aufweist.

5. Kit (40) nach einem der vorherigen Ansprüche, wobei die Einlassmündung (70) des rohrförmigen Körpers (65) einen Rand aufweist, der konfiguriert ist, um einen Rand einer Auslassmündung des Gebläses entlang seiner gesamten Erstreckung vollständig zu berühren.

6. Kit (40) nach einem der vorherigen Ansprüche, umfassend einen Tragrahmen (200), an dem der Behälter (45) befestigt ist, und ein Paar Schulterriemen (205), die an dem Tragrahmen befestigt sind.

7. Kit (40) nach einem der vorherigen Ansprüche, wobei die Diffusorvorrichtung (130) einen Regulierungsmechanismus (150, 155) der Durchflussrate des Fluids umfasst, das die Abgabeleitung (180) durchquert.

8. Zerstäuber, umfassend ein Gebläse, das Gebläse (10, 10') umfassend ein Gehäuse (15, 15'), das mit einer Auslassmündung (25, 25') versehen ist, ein Flügelrad (20, 20'), das in dem Gehäuse untergebracht und konfiguriert ist, um einen Luftstrom zu erzeugen, der die Auslassmündung durchquert, der Zerstäuber ferner umfassend ein Kit (40) nach Anspruch 1, wobei der rohrförmige Körper (65) mit dem Gehäuse verbunden ist und die Auslassmündung (70) des rohrförmigen Körpers in direkter Fluidverbindung mit der Auslassmündung des Gebläses ist.

9. Zerstäuber (10, 10', 130), umfassend:
- ein Gehäuse (15, 15'), das mit einer Auslassmündung (25) versehen ist,
- ein Flügelrad (20, 20'), das in dem Gehäuse untergebracht und konfiguriert ist, um einen Luftstrom zu erzeugen, der die Auslassmündung durchquert,
- eine Förderleitung (30, 30') des von dem Flügelrad erzeugten Luftstroms, die in Bezug auf die Richtung des von dem Flügelrad an sich erzeugten Luftstroms unmittelbar stromabwärts von dem Flügelrad (20, 20') platziert ist, die Förderleitung umfassend eine Einlassmündung (35'), die im Wesentlichen unmittelbar stromabwärts von dem Flügelrads (20, 20') platziert ist, und eine gegenüberliegende Auslassmündung, die mit der Auslassmündung (25, 25') des Gebläses zusammenfällt,
- einen rohrförmigen Körper (65), der angepasst ist, um an einer Auslassmündung (25) des Gebläses (10, 10') befestigt zu werden und mit einer Einlassmündung (70) und einer Auslassmündung (75) versehen ist,
- einen Behälter (45), der angepasst ist, um eine Flüssigkeit zu enthalten,
- eine Diffusorvorrichtung (130), die mit dem rohrförmigen Körper assoziiert und mit einer Flüssigkeitsabgabedüse (140) versehen ist,
- eine Druckleitung (155), die ein inneres Volumen (85) des rohrförmigen Körpers (65), das zwischen der Einlassmündung (70) und der Abgabedüse (140) für die Flüssigkeit platziert ist, mit einem oberen Abschnitt des Behälters (45) in Fluidverbindung bringt, und
- eine Abgabeleitung (180), die die Abgabedüse (140) der Diffusorvorrichtung mit einem unteren Abschnitt des Behälters (45) in Fluidverbindung bringt,
wobei der rohrförmige Körper (65) in zwei Bereiche unterteilt ist, die lösbar miteinander assoziierbar sind, wovon ein erster Bereich (110) konfiguriert ist, um an dem Gebläse (10, 10') befestigt zu werden, und einen zweiten Bereich (115), mit dem die Diffusorvorrichtung (130) assoziiert ist, wobei der Zerstäuber **dadurch gekennzeichnet ist, dass** die Druckleitung (155) ein inneres Volumen des ersten Bereichs (110) des rohrförmigen Körpers mit dem oberen Abschnitt des Behälters (45) in Fluidverbindung bringt.

## Revendications

1. Kit de conversion (40) destiné à la conversion d'un souffleur (10,10') en un atomiseur, ledit kit comprenant :
- un réservoir (45) adapté pour contenir un liquide,
- un corps tubulaire (65) adapté pour être fixé au souffleur (10,10') et pourvu d'une bouche d'entrée (70) et d'une bouche de sortie (75),
- un dispositif diffuseur (130) associé audit corps tubulaire et pourvu d'une buse de distribution de liquide (140),
- un conduit de pressurisation (155) qui met en communication fluidique un volume interne (85) du corps tubulaire (65) disposé entre la bouche d'entrée (70) et la buse de distribution (140) du liquide avec une partie supérieure du réservoir (45), et
- un conduit de distribution (180) qui met en communication fluidique la buse de distribution (140) du dispositif diffuseur (130) avec une partie inférieure du réservoir (45)
dans lequel le corps tubulaire (65) est divisé en deux sections qui sont associées de manière amovible l'une à l'autre, dont une première section (110) configurée pour être fixée au souffleur (10,10'), et une deuxième section (115) à laquelle le dispositif diffuseur (130) est associé, ledit kit de conversion étant **caractérisé en ce que** le conduit de pressurisation (155) met en communication fluidique un volume interne de la première section (110) du corps tubulaire avec la partie supérieure du réservoir (45).

2. Kit (40) selon la revendication 1, comprenant un dispositif de couplage rapide configuré pour relier de façon amovible la première section (110) et la deuxième section (115).

3. Kit (40) selon l'une quelconque des revendications précédentes, dans lequel le corps tubulaire (65) est pourvu d'un convergent (100) et le conduit de pressurisation (155) comprend une ouverture d'entrée (160) réalisée dans ledit convergent.

4. Kit (40) selon l'une quelconque des revendications précédentes, dans lequel le conduit de pressurisation (155) comprend une section qui s'étend directement à partir d'une ouverture d'entrée (160) du conduit de pressurisation lui-même réalisé dans le corps tubulaire (65), ladite section ayant un axe longitudinal transversal à la direction du fluide à l'intérieur du corps tubulaire (65).

5. Kit (40) selon l'une quelconque des revendications précédentes, dans lequel la bouche d'entrée (70) du corps tubulaire (65) possède un bord configuré pour entrer entièrement en contact, sur toute son extension, avec un bord d'une bouche de sortie du souffleur.

6. Kit (40) selon l'une quelconque des revendications précédentes, comprenant un cadre de support (200) auquel est fixé le réservoir (45), et une paire de sangles d'épaules (205) fixées audit cadre de support.

7. Kit (40) selon l'une quelconque des revendications précédentes, dans lequel le dispositif diffuseur (130) comprend un mécanisme de régulation (150,155) du débit du fluide qui traverse le conduit de distribution (180).

8. Atomiseur comprenant un souffleur, le souffleur (10,10') comprenant un boîtier (15,15') muni d'une bouche de sortie (25,25'), une roue (20,20') logée dans le boîtier et configurée pour générer un flux d'air qui traverse ladite bouche de sortie, l'atomiseur comprenant en outre un kit (40) selon la revendication 1, dans lequel le corps tubulaire (65) est relié au boîtier et la bouche de sortie (70) du corps tubulaire est en communication fluidique directe avec la bouche de sortie du souffleur.

9. Atomiseur (10,10', 130) comprenant :
- un boîtier (15,15') pourvue d'une bouche de sortie (25),
- une roue (20,20') logée dans le boîtier et configurée pour générer un flux d'air qui traverse ladite bouche de sortie,
- un conduit d'acheminement (30,30') du flux d'air généré par la roue, qui est placé immédiatement en aval de la roue (20,20') par rapport à la direction du flux d'air généré par la roue elle-même, ledit conduit d'acheminement comprenant une bouche d'entrée (35') sensiblement placée immédiatement en aval de la roue (20,20') et une bouche de sortie opposée qui coïncide avec la bouche de sortie (25,25') du souffleur,
- un corps tubulaire (65) adapté pour être fixé à la bouche de sortie (25) du souffleur (10,10') et pourvu d'une bouche d'entrée (70) et d'une bouche de sortie (75),
- un réservoir (45) adapté pour contenir un liquide,
- un dispositif diffuseur (130) associé audit corps tubulaire et pourvu d'une buse de distribution de liquide (140),
- un conduit de pressurisation (155) qui met en communication fluidique un volume interne (85) du corps tubulaire (65) disposé entre la bouche d'entrée (70) et la buse de distribution (140) du liquide avec une partie supérieure du réservoir (45), et
- un conduit de distribution (180) qui met en communication fluidique la buse de distribution (140) du dispositif diffuseur avec une partie inférieure du réservoir (45) dans lequel le corps tubulaire (65) est divisé en deux sections qui sont associées de manière amovible l'une à l'autre, dont une première section (110) configurée pour être fixée au souffleur (10,10'), et une deuxième section (115) à laquelle le dispositif diffuseur (130) est associé, ledit atomiseur étant **caractérisé en ce que** le conduit de pressurisation (155) met en communication fluidique un volume interne de la première section (110) du corps tubulaire avec la partie supérieure du réservoir (45).
